# EUROPEAN PATENT APPLICATION

(11) **EP 4 395 117 A1**
(43) Date of publication of application: **03.07.2024**
(21) Application number: 22383308.8
(22) Date of filing: 28.12.2022
(51) Int. Cl.: H02J 7/14, H02J 7/34, B64U 50/19, B64U 50/36, B64D 27/24, B64U 50/34, H02J 7/00

(54) **IN-FLIGHT ELECTRICAL CHARGING SYSTEM AND METHOD FOR A BATTERY-POWERED AIRCRAFT**

(71) Applicant: Airbus Operations, S.L.U., 28906 Getafe (Madrid) (ES)
(72) Inventor: CASADO MONTERO, Carlos, Getafe (ES)
(74) Representative: Elzaburu S.L.P.

(57) **Abstract**

In-flight electrical charging system and method for a battery-powered aircraft located in a charging aircraft and comprising:
- an electrical generation module (1) comprising:
o a turbine (1.1),
o an electric generator (1.2) in electrical connection to the turbine (1.1) for generating electricity,
o a turbine control unit in connection with the turbine (1.1) and controlling it (1.1), and
o an electric generator control unit in connection with the electric generator (1.2) and controlling it (1.2),

- a deployable power supply module (3), in electrical connection to the electrical generation module (1) and comprising at least a cable configured for the electrical connection of the electrical generation module (1) to the battery-powered aircraft to be charged,
- a pod (2) configured to be applied to the charging aircraft, wherein the electrical generation module (1) and the deployable power supply module (3) are located within the pod (2).

## Description

### FIELD OF THE INVENTION

The invention relates to a system and a method for transferring electric power to a battery-powered aircraft for the purpose of battery recharging. The present invention provides for increasing the power reserve of an electrically propelled aircraft via an in-flight recharging process.

### BACKGROUND OF THE INVENTION

Aerial electric vehicles are known. Small aircraft and drones have been powered electrically in the past years.

One of the well-known problems of this technology is the limited flight time that batteries offer. It is known that requiring an aircraft to land and charge mid-flight can be costly in terms of time and money. It can cause delays in executing a mission and may also be inconvenient or impractical. It is, therefore, advantageous to provide a system for aerial recharging of an electric aircraft.

Nowadays, piloted aircraft and in-flight refueling is widely used for fuel-powered aircraft. A tanker aircraft acts as refueller for a receiving aircraft. The refueller is generally an airplane with high capacities to have the maximum fuel available for the aircraft that meet it. The refueller drags behind it an in-flight refueling device which can take two different forms: either a rigid boom which will be controlled from the refueling aircraft, or a basket at the end of a flexible hose in which the aircraft to be refueled will be refueled via a refueling boom.

Unmanned aerial vehicles (UAV) are becoming more important, specifically electric unmanned aerial vehicles (UAVs). Electric propulsion owns a minimum acoustic and thermal footprint, a key feature for military and civil application. Although batteries may be therefore a driver for tactical unmanned aerial systems (UAS) electrification transition, as previously explained, batteries have the drawback of its limited flight time. Thus, a recharging system may enlarge its operability by loading them electrically.

### SUMMARY OF THE INVENTION

It is an object of the present invention an in-flight electrical charging system for a battery-powered aircraft. The system is configured to be located in a charging aircraft and it comprises:
- an electrical generation module comprising:
   ∘ a turbine, for instance, a ram turbine,
   ∘ an electric generator in electrical connection to the turbine for generating electricity,
   ∘ a turbine control unit in connection with the turbine and configured for controlling the turbine, and
   ∘ an electric generator control unit in connection with the electric generator and configured for controlling the electric generator,
- a deployable power supply module, in electrical connection to the electrical generation module and comprising at least a cable configured for the electrical connection of the electrical generation module to the battery-powered aircraft to be charged,
- a pod configured to be applied to the charging aircraft, wherein the electrical generation module and the deployable power supply module are located within the pod.

It should be noted that the designation of "charging aircraft" in this context is provided by way of illustrative example, only. The nature of the aircraft need not be fixed, it may be a drone, an airplane, a helicopter, etc.

For the purposes of this disclosure, the term "battery-powered aircraft" shall be taken to include aircraft that have at least one battery and at least one electric motor as any portion of their propulsion design, such as all-electric or hybrid-electric aircraft.

By aircraft the disclosure refers to planes and drones being manned or unmanned, regardless of its size.

The charging aircraft need not necessarily be an electric aircraft. The charging aircraft could be any a fuel powered aircraft or electric aircraft (hybrid or fully electrical) with the portable and modular charging system object of the invention.

According to the above, the claimed system comprises a turbine, for instance, a ram turbine, which generates power from the airstream based on the speed of the charging aircraft and which is connected to the electric generator which transforms the motion of the ram turbine into electricity.

A ram turbine is a Ram Air Turbine (RAT) a wind turbine that is installed in an aircraft and usually used as an alternate or emergency hydraulic or electrical power source.

One of the main advantages of the invention is its modularity, providing within a single component, a pod, all the functionalities of the power system. Therefore, the system of the invention may comprise a simple interface with the aircraft without the need for additional connections. This allows that the system may be certified independently of the electrical network or the fuel network of the aircraft.

Thus, the system object of the invention works independently from the aircraft, except for the command orders, for instance, to retract the cable, etc. but otherwise autonomous or independent of the aircraft's generation sources.

The system comprises a control unit for the turbine, withing the pod, for instance for opening and closing the inlets and outlets of the turbine. It also comprises a control unit for the electric generator within the pod. They can be implemented in the same controlling unit or in two different controlling units.

The deployable power supply module comprises another control unit. The control of the deployable power supply module may be fully or partially automatic or controlled manually or partially by crew members but always with a priority of crew member control.

Therefore, the electrical generation is independent from the generation and distribution aircraft network. As previously stated, this is mainly due to the fact that the generation of electrical power is based on a turbine, for instance, a high-speed ram turbine, thus, no fuel charged or electrical input from the aircraft is to be used.

Moreover, the system object of the invention is installed into a pod, i.e., a protective housing having a streamlined shape located under the wings or the fuselage of the aircraft.

The claimed invention is, therefore, a modular element with a minimum interface with the charging aircraft. As previously stated, it is also a self-power electrical generator system, without power supply from the charging aircraft. Thus, the main advantages of the system are that it is an autonomous integrated system.

The in-flight electrical charging system located in the pod has an electrical connection with the charging aircraft and it is configured to receive instructions from the charging aircraft. However, the control unit of the system is located within the pod. It may comprise its own battery. Thus, as the interface of the system with the charging aircraft is restricted to a minimum, it is easily adaptable to any aircraft. Moreover, as the system is modular in the sense that its relevant elements are located within the pod, the system may be allocated to an aircraft for a specific mission and removed for other purposes or missions.

The deployment of the power supply module is be able to be commanded from the cockpit or from another panel inside the aircraft. Likewise, if there is a failure, the pilot or someone from the flight crew, can control the cancellation of the operation or another safety measure. Therefore, it is required that the pilot or someone from the aircraft can command, control and monitor the deployable power supply module. Input and output signals are needed to command the action.

The power supply system of the module can be adapted to the power quality of the aircraft to be recharged.

In addition, the system is compatible with other mission modules.

The claimed invention would allow tactical unmanned aerial vehicles (UAV) within a tactical unmanned aerial systems (UAS) having a non-time limited operation. This will open new and extended operation market for unmanned aerial systems (UAS) having in mind today's technical features or limitations of unmanned aerial systems (UAS), future trend for mission-enhanced and environmental unmanned aerial systems (UAS).

An electrical charging in flight system will complement the reduce flight time of batteries, increasing the pay-load ratio and enhancing to a no-time limited system, with a non-stop operation, overall, when thinking in tactical UAS/UAV swarm.

Moreover, the invention avoids the need to develop a dedicated unmanned aerial vehicles (UAV) for performing the charging operation. The invention allows its accommodation to any aircraft, for instance, a plane unmanned aerial vehicles (UAV) that integrates the claimed charging system in a pod. Therefore, the claimed invention is flexible, it is compatible with wider types of existing unmanned aerial systems (UAS). By doing this, the system is not constrained to one single source, but to a more open market.

It is also an object of the present invention a pod of an aircraft comprising an electrical charging in-flight system according to the described above.

The pod is configured to be applied to the charging aircraft and comprises an in-flight electrical charging system comprising:
- an electrical generation module comprising:
   ∘ a turbine,
   ∘ an electric generator in electrical connection to the turbine for generating electricity,
   ∘ a turbine control unit in connection with the turbine and configured for controlling the turbine, and
   ∘ an electric generator control unit in connection with the electric generator and configured for controlling the electric generator,
- a deployable power supply module, in electrical connection to the electrical generation module and comprising at least a cable configured for the electrical connection of the electrical generation module to the battery-powered aircraft to be charged,
wherein the electrical generation module and the deployable power supply module are located within the pod.

It is also a further object of the present invention an aircraft, specifically a charging aircraft which comprises an in-flight electrical charging system according to the described above or a pod according to the above described.

It is also an object of the present invention a method for in-flight electrical charging for battery-powered aircraft, comprising the following steps:
- generating electricity in an electrical generation module located within a pod of a charging aircraft, the electrical generation module comprising:
   ∘ a turbine,
   ∘ an electric generator in electrical connection to the turbine for generating electricity,
   ∘ a turbine control unit in connection with the turbine and configured for controlling the turbine and a generator control unit in connection with the generator and configured for controlling the generator,
- approaching the battery-powered aircraft to the charging aircraft,
- deploying a cable from a deployable power supply module located within the pod of the charging aircraft, the deployable power supply module being in electrical connection with the electrical generation module, the cable electrically connecting the electrical generation module with the battery-powered aircraft,
- bring the deployed cable into contact with the battery-powered aircraft and charging it.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a schematic cross-sectional lateral view of a pod and an embodiment of the in-flight electrical charging system of the invention.
Figure 2 shows an aircraft with a pod according to an embodiment of the invention.

### DETAILED DESCRIPTION OF THE INVENTION

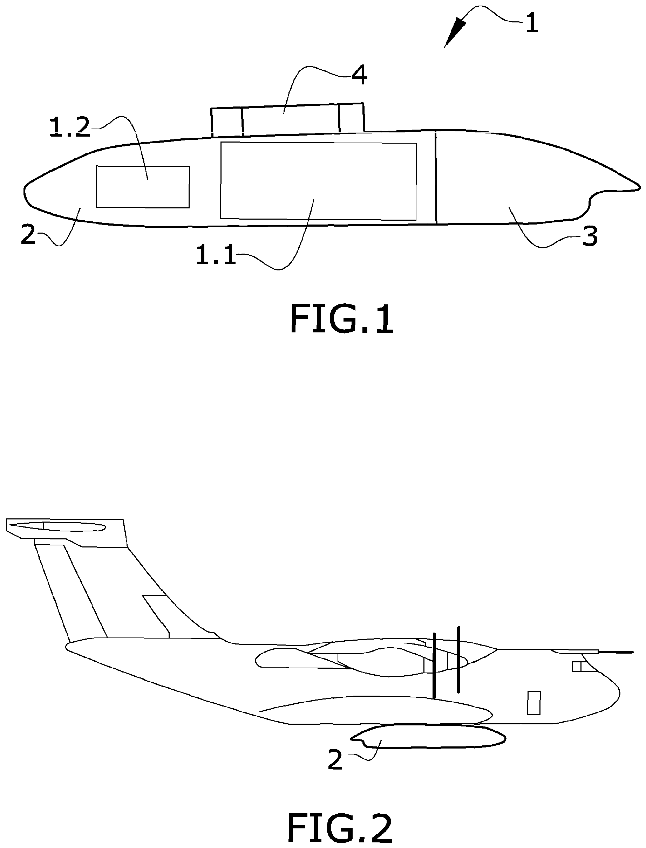

Figure 1 discloses an embodiment of the in-flight electrical charging system object of the invention. The system comprises:
- the electrical generation module (1) comprising:
   ∘ the ram turbine (1.1),
   ∘ the electric generator (1.2) electrically connected to the ram turbine (1.1) for generating electricity,
   ∘ the turbine control unit in connection with the ram turbine (1.1) and configured for controlling the ram turbine (1.1), and
   ∘ a generator control unit in connection with the electric generator (1.2) and configured for controlling the electric generator (1.2),
- the deployable power supply module (3), in electrical connection to the electrical generation module (1) and comprising at least a cable, electric cable, configured for the electrical connection of the electrical generation module (1) with the battery-powered aircraft to be charged,
- a pod (2) applied to the charging aircraft wherein the electrical generation module (1) and the deployable power supply module (3) are located within the pod (2).

The charging aircraft may have a cable or a boom comprising a cable that can be extended to electrically engage a battery-powered aircraft. The charging aircraft may have multiple such booms or cables, so that multiple battery-powered aircraft can recharge at one time.

The cable comprises an electrical connection to the aircraft to be charged. It must be flexible since a swarm could consist of two unmanned aerial vehicles (UAVs) or many more, therefore able to:
- supply power to one or several unmanned aerial vehicles (UAV) simultaneously, and/or
- supply a sequenced unmanned aerial vehicles (UAV) charging.

In an embodiment, the electric generator (1.2) may be a direct shaft driven generator, therefore there is no need for a gearbox. It may be a high-speed generator (12000 rpm to 35000 rpm), high efficiency generator, air cooled with inverter/rectifier installed providing a high-voltage direct current (HVDC). However, it would be possible to adapt the system to a different voltage.

The in-flight electrical charging system may comprise an interface (4) with the charging aircraft comprising a supply output to the charging aircraft such that the turbine control unit in connection with the ram turbine (1.1) and configured for controlling the ram turbine (1.1) opens and closes the inlets and outlets of the ram turbine (1.1).

The system may in addition comprise a battery for ram turbine (1.1) actuation that opens the inlets and outlets of the ram turbine (1.1). Two options can be considered: that it is located onboard the charging aircraft and provides power to the aircraft or, alternatively, that a dedicated battery is installed inside the pod (2) that allows this operation to be autonomous that would be powered or charged by the ram turbine (1.1) once operational.

The system may comprise a mini electric generator as back-up system.

In an embodiment, the system further comprises a cooling system located withing the pod (2). For instance, an air-oil cooled integrated into the electrical module.

In an embodiment, the system comprises an interface (4) with the charging aircraft, the interface (4) comprising an input/output signals bus data for controlling the deployable power supply module (3) and an electrical output to the charging aircraft.

More specifically, the in-flight electrical charging system comprises an interface (4) with one single bus data (TBC) and one single electrical high-voltage direct current (HVDC) output. The control and monitoring interface may comprise a bus data of different types and it can be single or double. The commands are redundant for safety.

In an embodiment, the electrical generation module comprises at the pod (2):
▪ A control/monitoring unit for power generator (1.2).
▪ A control/monitoring unit for turbine (1.1), for instance, air or ram turbine (1.1).

Both units may be accommodated into one single unit comprising both controls.

In addition, a control/monitoring unit for the deployable power supply module (3) can be devised located in the aircraft.

It also comprises a power inlet supply for the above controllers.

In an embodiment, the electrical generation module comprises two supply outputs: one for the deployable power supply module (3) and one for the aircraft supply located in the interface (4) of the system.

The deployable power supply module (3) may comprise a rigid boom with a cable or a flexible cable having on the end, for instance, a charging jack that is configured to engage a charging port on the battery-powered aircraft to be charged. It may also comprise a known cable stability when deployed based on existing refueling systems.

The invention does not relate on the technology for electrical charging. It is assumed that electrical charging is easier than refueling. The charging may be at High Voltage DC, which has a smaller cable sizing and with a direct loading to batteries without being treated at the unmanned aerial vehicles (UAV).

## Claims

1. In-flight electrical charging system for a battery-powered aircraft, the system being configured to be located in a charging aircraft, the system **characterized in that** it comprises:
- an electrical generation module (1) comprising:
∘ a turbine (1.1),
∘ an electric generator (1.2) in electrical connection to the turbine (1.1) for generating electricity,
∘ a turbine control unit in connection with the turbine (1.1) and configured for controlling the turbine (1.1), and
∘ an electric generator control unit in connection with the electric generator (1.2) and configured for controlling the electric generator (1.2),
- a deployable power supply module (3), in electrical connection to the electrical generation module (1) and comprising at least a cable configured for the electrical connection of the electrical generation module (1) to the battery-powered aircraft to be charged,
- a pod (2) configured to be applied to the charging aircraft, wherein the electrical generation module (1) and the deployable power supply module (3) are located within the pod (2).

2. In-flight electrical charging system for a battery-powered aircraft, according to claim 1, wherein the system comprises an interface (4) with the charging aircraft, the interface (4) comprising an input/output signals bus data for controlling the deployable power supply module (3) and an electrical output to the charging aircraft.

3. In-flight electrical charging system for a battery-powered aircraft, according to any preceding claim, wherein the deployable power supply module (3) comprises several cables configured for the electrical connection of several battery-powered aircraft.

4. In-flight electrical charging system for a battery-powered aircraft, according to any preceding claim, wherein the electric generator (1.2) is a direct shaft driven generator.

5. In-flight electrical charging system for a battery-powered aircraft, according to any preceding claim, wherein the system further comprises a cooling system located within the pod (2).

6. In-flight electrical charging system for a battery-powered aircraft, according to any preceding claim, wherein it comprises a battery within the pod (2) for the turbine (1.1) actuation.

7. In-flight electrical charging system for a battery-powered aircraft, according to any preceding claim, wherein the turbine (1.1) is a turbine configured to generate power from the airstream based on the speed of the charging aircraft.

8. Pod (2) of an aircraft, configured to be applied to a charging aircraft, **characterized in that** it comprises an in-flight electrical charging system comprising:
- an electrical generation module (1) comprising:
∘ a turbine (1.1),
∘ an electric generator (1.2) in electrical connection to the turbine (1.1) for generating electricity,
∘ a turbine control unit in connection with the turbine (1.1) and configured for controlling the turbine (1.1), and
∘ an electric generator control unit in connection with the electric generator (1.2) and configured for controlling the electric generator (1.2),
- a deployable power supply module (3), in electrical connection to the electrical generation module (1) and comprising at least a cable configured for the electrical connection of the electrical generation module (1) to the battery-powered aircraft to be charged,
wherein the electrical generation module (1) and the deployable power supply module (3) are located within the pod (2).

9. Aircraft, **characterized in that** it comprises an in-flight electrical charging system according to any preceding claim 1 to 7.

10. Method for in-flight electrical charging for battery-powered aircraft, comprising the following steps:
- generating electricity in an electrical generation module (1) located within a pod (2) of a charging aircraft, the electrical generation module (1) comprising:
∘ a turbine (1.1),
∘ an electric generator (1.2) in electrical connection to the turbine (1.1) for generating electricity,
∘ a turbine control unit in connection with the turbine and configured for controlling the turbine, and
∘ a generator control unit in connection with the electric generator (1.2) and configured for controlling the generator,
- approaching the battery-powered aircraft to the charging aircraft,
- deploying a cable from a deployable power supply module (3) located within the pod (2) of the charging aircraft, the deployable power supply module (3) being in electrical connection with the electrical generation module (1), the cable electrically connecting the electrical generation module (1) with the battery-powered aircraft,
- bring the deployed cable into contact with the battery-powered aircraft and charging it.
